# EUROPEAN PATENT APPLICATION

(11) **EP 4 821 790 A1**
(43) Date of publication of application: **14.10.2026**
(21) Application number: 26170930.7
(22) Date of filing: 07.04.2026
(51) Int. Cl.: B62B 7/00, B62B 7/14

(54) **STROLLER CONVERTIBLE FROM A SOLO TO A DUO VERSION**

(30) Priority: 08.04.2025 CN 202520651487 U; 08.04.2025 CN 202520652457 U; 08.04.2025 CN 202520652309 U
(71) Applicant: Dorel France SAS, 49309 Cholet (FR)
(72) Inventor: Xia, Tiejun, Shaoxing City, 312369 (CN); Ma, Congquan, Shaoxing City, 312369 (CN); Zhao, Guosong, Shaoxing City, 312369 (CN)
(74) Representative: Vidon Brevets & Stratégie

(57) **Abstract**

The present application relates to a child carrying device, comprising a support frame (100), provided with at least a pair of first adapter brackets (140) provided to releasably accommodate a removable first carrier (170), the first adapter brackets (140) being slidable relative to the support frame (100), between a first position and a second position, wherein the first adapter brackets (140) each comprise locking means (150, 160), configured to prevent the first adapter brackets (140) from being moved from one of the positions to the other when a first carrier (170) is mounted on them, and allowing them to be moved when the first carrier (170) is removed from the first adapter brackets (140).

## Description

### Technical Field

The present application relates to the technical field of child products, and specifically relates to a child carrying device.

### Technical Background

Some existing child strollers have a dual-occupant riding mode and a single-occupant riding mode. For example, Chinese utility model CN222202662U discloses a child stroller, in which a sliding seat is slidably provided on a push handle, and a second plug-in seat is provided on the sliding seat, the second plug-in seat being used for connecting carriers such as seats.

The sliding seat has at least two positions relative to the push handle, and can be positioned on the push handle by means of a locking member.

A driving block for unlocking the locking member is provided on the second plug-in seat, and a pressing portion of the driving block protrudes from a front surface of the second plug-in seat.

Although the position adjustment of the second plug-in seat can be achieved without removing the carrier, there exists a probability that a child or a caregiver may easily accidentally actuate the unlocking member, thereby posing certain safety hazards.

### Summary

The present application provides a child carrying device, so as to improve safety during use.

The present application provides a child carrying device, comprising: a support frame, provided with at least a pair of first adapter brackets provided to releasably accommodate a removable first carrier, the first adapter brackets being slidable relative to the support frame, between a first position and a second position, wherein the first adapter brackets each comprise locking means, configured to prevent the first adapter brackets from being moved from one of the positions to the other when a first carrier is mounted on them, and allowing them to be moved when the first carrier is removed from the first adapter brackets.

The locking member locks the first adapter bracket to maintain it in the first position or the second position. The unlocking member drives the locking member to unlock. The first carrier is releasably engageable with the first adapter bracket so as to be mounted on the support frame; When the first carrier is mounted on the support frame, the first carrier covers the unlocking member; and when the first carrier is removed from the support frame, the unlocking member is exposed.

When adjusting the position of the first carrier, it is thus necessary to first remove the first carrier to expose the unlocking member before performing an unlocking operation, and then adjust the position of the first adapter bracket.

This prevents accidental actuation of the unlocking member by users or children, thereby improving safety during use.

The following further provides several optional alternatives, which are not intended as additional limitations to the above overall solution, but are merely further supplements or preferred embodiments. Provided that no technical or logical contradiction exists, each optional alternatives may be individually combined with the above overall solution, or multiple optional alternatives may be combined with one another.

Optionally, the locking means comprise a locking member, configured to lock the corresponding first adapter bracket on the support frame, and an unlocking member, configured to drive the locking member to unlock.

Optionally, the unlocking member is accessible on the corresponding first adapter bracket and active when the first carrier is not attached to said first adapter bracket, and is concealed and/or blocked by an extension of the first carrier when the first carrier is attached to said first adapter bracket, so that the unlocking member is inaccessible and/or inactive.

Optionally, the first carrier is provided with a pair of first adapters each releasably engageable with one of said first adapter brackets, each of said first adapters concealing and/or blocking the corresponding unlocking member.

Optionally, each of the first adapter brackets comprises a latching member and a sliding member slidably matched with the support frame, the latching member and the sliding member being arranged in a horizontal direction, the latching member being located on an inner side, the sliding member being located on an outer side, and the unlocking member is movably arranged on an inner surface of the latching member.

Optionally, the unlocking member is movably arranged in the horizontal direction.

Optionally, the unlocking member is arranged at a central position of the latching member.

Optionally, a recessed groove for concealing the unlocking member is provided in a central region of the latching member.

Optionally, said two first adapter brackets are slidably mounted on a push handle assembly of the support frame, for receiving said first carrier.

Optionally, the child carrying device comprises a second pair of adapter brackets for receiving a second carrier, wherein the second adapter brackets are provided on a front leg assembly of the support frame, the second carrier being provided with a pair of second adapters releasably engageable with the second adapter brackets.

Optionally, the child carrying device has at least two usage modes:
- in a first usage mode, a first carrier is mounted on the support frame, the first adapter brackets being positioned at the first position, and the second carrier is removed from the front leg assembly; and
- in a second usage mode, the first adapter brackets being positioned at the second position, and the second carrier is mounted on the front leg assembly.

Optionally, the second adapter brackets are movably connected to the front leg assembly and have a use position and a folded position, and wherein in the first usage mode, the second adapter brackets are in the folded position, and in the second usage mode, the second adapter bracket are in the use position.

Optionally, when a first adapter is engaged with a corresponding first adapter bracket, the two are able to rotate about an axis, the support frame having a folded state and unfolded state, so that when the support frame is folded, the first carrier rotates to approach the front leg assembly or a rear leg assembly of the support frame.

Optionally, the first carrier is a seat comprising a seat portion and a backrest portion, and the first carrier itself also has a folded state and an unfolded state, and in the folded state, the backrest portion approaches the seat portion, and then the whole rotates to approach the support frame.

Optionally, a rear side of the latching member is provided with an annular latching groove extending along a circumferential direction, which is used to limit axial movement of the first carrier and prevent detachment from the first adapter bracket, and also allows the first carrier to rotate for folding.

Optionally, a positioning member for limiting rotation of the first carrier is movably provided on the first adapter and the latching member is provided with a positioning groove that cooperates with the positioning member.

Optionally, the first carrier has two mounting orientations, facing forward or facing backward.

### Brief Description of the Drawings

**Figure 1** is a perspective view of a child carrying device according to an embodiment of the present application in a first usage mode;
**Figure 2** is a perspective view of a child carrying device according to an embodiment of the present application in a second usage mode;
**Figure 3** is a perspective view of the support frame of a child carrying device according to an embodiment of the present application (with the first adapter bracket in the first position);
**Figure 4** is a perspective view of the support frame of a child carrying device according to an embodiment of the present application (with the first adapter bracket in the second position);
**Figure 5** is a front view of the support frame of Figure 4;
**Figure 6** is a partial exploded view of the support frame of a child carrying device according to an embodiment of the present application at one push handle rod;
**Figure 7** is a partial cross-sectional view taken along direction A-A in Figure 5;
**Figure 8** is a partial cross-sectional view taken along direction B-B in Figure 7;
**Figure 9** is a partial view of a child carrying device according to an embodiment of the present application showing a second adapter bracket;
**Figure 10** is an exploded view of a mounting seat and the second adapter bracket of Figure 9;
**Figure 11** is an exploded view of the mounting seat and the second adapter bracket in Figure 9 from another perspective;
**Figure 12** is a front view of the second adapter bracket according to an embodiment of the present application;
**Figures 13-15** are partial cross-sectional views taken along direction C-C in Figure 12, corresponding respectively to a folded position, an unlocked folded position, and a use position of the second adapter bracket ;
**Figure 16** is a partial cross-sectional view taken along direction D-D in Figure 12;
**Figure 17** is a cross-sectional view taken along direction A-A in Figure 5 (with the carrying member for allowing a child to stand in the first usage position);
**Figure 18** is a cross-sectional view taken along direction A-A in Figure 5 (with the carrying member in the second usage position);
**Figure 19** is a partial view of a child stroller according to an embodiment of the present application at a rear leg assembly;
**Figure 20** is an exploded view of the carrying member in Figure 19;
**Figure 21** is an exploded view of a fourth locking member and a second unlocking member in Figure 20;
**Figure 22** is a cross-sectional view taken along direction E-E in Figure 5 (with the carrying member in the first usage position);
**Figure 23** is a cross-sectional view taken along direction E-E in Figure 5 (with the carrying member in the second usage position).

### Explanation of Reference Numerals in the Drawings

100 - support frame; 110 - front leg assembly; 111 - front leg rod; 112 - front wheel; 113 - cross rod; 120 - rear leg assembly; 121 - rear leg rod; 122 - rear wheel; 123 -transverse connecting member; 124 - wheel seat; 125 - transverse support member; 130 - push handle assembly; 131 - push handle rod; 132 - grip rod; 133 - slide rail; 140 - first adapter bracket or base; 141 - locking groove; 142 - latching member; 1421 - annular latching groove; 143 - sliding member; 144 - positioning groove; 145 - recessed groove; 150 - locking member; 151 - elastic member; 160 - unlocking member; 161 - operating portion; 162 - transmission portion; 170 - first carrier; 171 - first adapter; 180 - second carrier; 181 - second adapter; 190 - joint; 200 - second adapter bracket or base; 201 - base portion; 2011 - third locking groove; 202 - latching portion; 203 - latching groove; 204 - avoidance opening; 210 - mounting seat or base; 2101 - second locking groove; 220 - anti-misassembly member; 221 - driving inclined surface; 230 - elastic member; 250 - second locking member; 2501 - second locking portion; 2502 - second operating portion; 2503 - second transmission portion; 260 - third locking member; 300 - carrying member; 310 - sliding seat; 311 - fourth locking groove; 320 - upper portion; 330 - lower portion; 331 - intermediate portion; 332 - side portion; 340 - fourth locking member; 341 - elastic member; 350 - second unlocking member; 351 - elastic member.

### Preferred Embodiments

Below, in conjunction with the accompanying drawings of the embodiments of the present application, the technical solutions of the embodiments of the present application will be described clearly and completely. Obviously, the described embodiments are only a part of the embodiments of the present application, rather than all of the embodiments.

Based on the embodiments of the present application, all other embodiments obtained by a person of ordinary skill in the art without creative labor shall fall within the scope of protection of the present application.

It should be noted that when a component is described as being "connected to" another component, it may be directly connected to the other component, or there may also be an intermediate component present. When a component is described as being "provided on" another component, it may be directly provided on the other component, or there may also be an intermediate component present.

Unless otherwise defined, all technical and scientific terms used herein have the same meanings as those commonly understood by a person skilled in the technical field to which the present application belongs. The terms used herein in the description of the present application are only for the purpose of describing specific embodiments and are not intended to limit the present application. The term "and/or" as used herein includes any and all combinations of one or more of the listed related items.

In the present application, the terms "first", "second", and the like are used only for descriptive purposes, and shall not be understood as indicating or implying relative importance or implicitly indicating the number or order of the indicated technical features. Thus, a feature defined with "first" or "second" may explicitly or implicitly include one or more of such features. In the description of the present application, "plurality" means at least two, such as two, three, and so on, unless otherwise clearly and specifically defined.

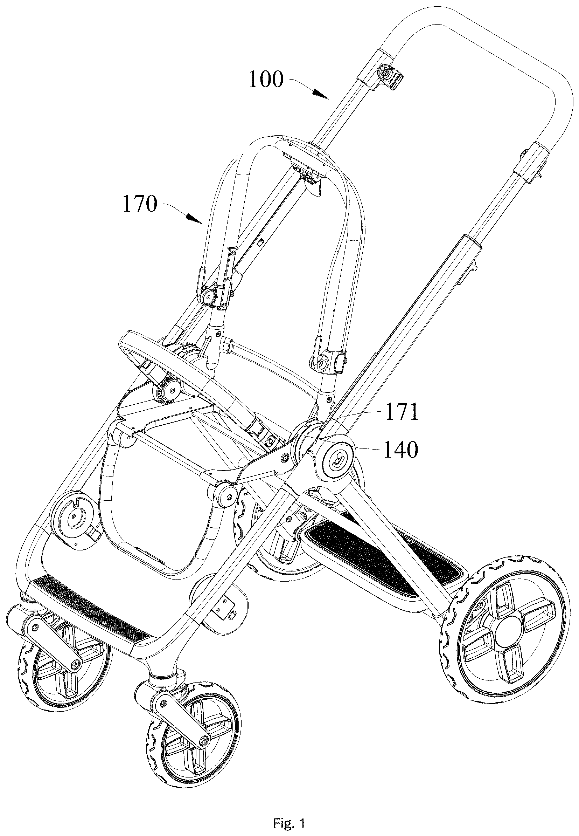

Referring to Figures 1 to 4, the present application provides a child carrying device, comprising a support frame 100 and one or more carriers mounted on the support frame 100. The child carrying device may be a child stroller, a child highchair, a camping wagon, or the like. Figures 1 to 4 illustrate a child carrying device in the form of a child stroller. The support frame 100 comprises a front leg assembly 110, a rear leg assembly 120, and a push handle assembly 130. The front leg assembly 110 is arranged to incline upward from front to rear, the rear leg assembly 120 is arranged to incline downward from front to rear, and the push handle assembly 130 is arranged to incline upward from front to rear. The bottom of the front leg assembly 110 is provided with front wheels 112, and the bottom of the rear leg assembly 120 is provided with rear wheels 122.

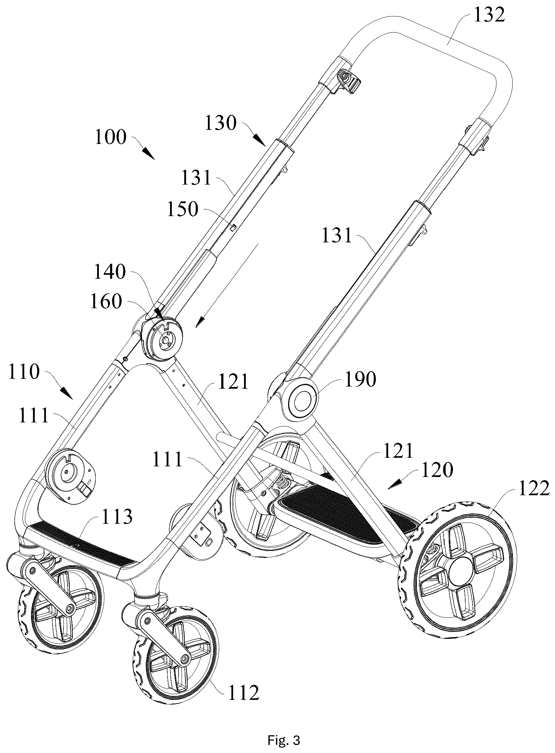

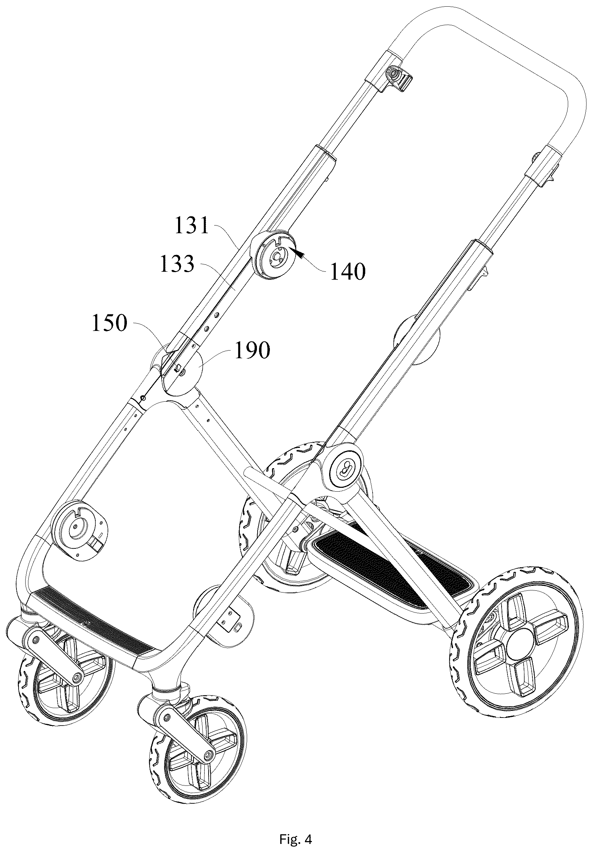

As shown in Figures 3 and 4, the push handle assembly 130 comprises two push handle rods 131 arranged opposite to each other, the front leg assembly 110 comprises two front leg rods 111 arranged opposite to each other, and the rear leg assembly 120 comprises two rear leg rods 121 arranged opposite to each other. Further, the push handle assembly 130 further comprises a transverse grip rod 132 connecting the two push handle rods 131. In one embodiment, the push handle rods 131 comprise a lower push handle rod and an upper push handle rod that are slidably fitted with each other, and the grip rod 132 connects the tops of the two upper push handle rods.

In one embodiment, the push handle rods 131, the front leg rods 111, and the rear leg rods 121 are convergently connected at joint 190. The joint 190 has joint elements respectively connected to the push handle rods 131, the front leg rods 111, and the rear leg rods 121.

As shown in Figure 3, in one embodiment, the joint 190 comprises a front leg joint, a rear leg joint, and a push handle joint that are hinged to each other. The front leg joint is connected to the front leg assembly 110, the rear leg joint is connected to the rear leg assembly 120, and the push handle joint is connected to the push handle assembly 130, such that the support frame 100 has a folded state and an unfolded state. A linkage member is provided between the front leg joint and the push handle joint, and when the push handle assembly 130 rotates and approaches the rear leg assembly 120, the linkage member drives the front leg assembly 110 to rotate and approach the rear leg assembly 120.

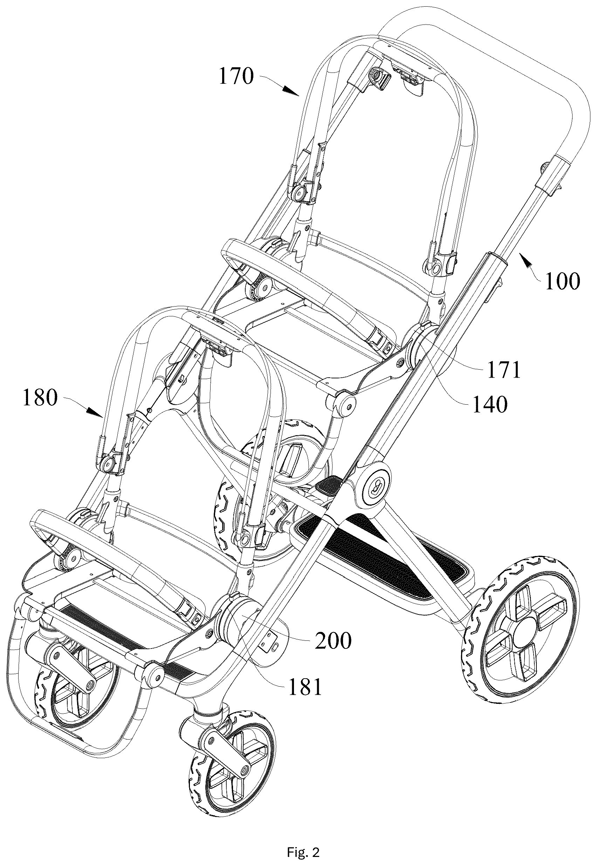

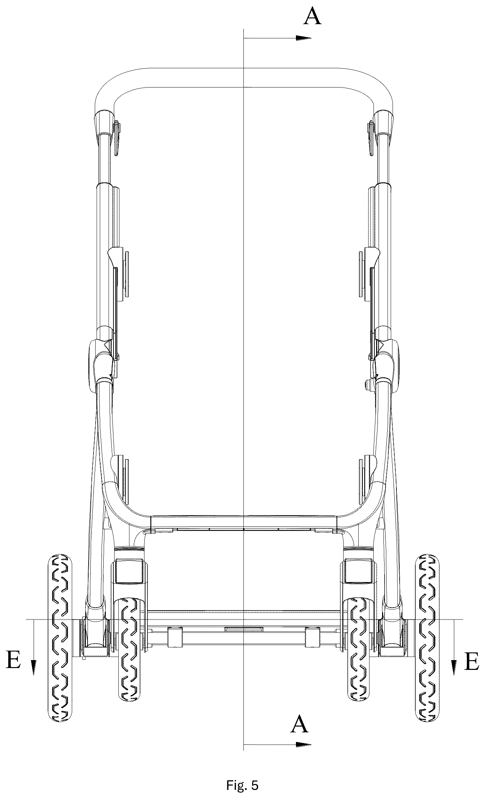

As shown in Figures 5 to 8, the child carrying device comprises a first adapter bracket 140, a locking member 150, an unlocking member 160, and a first carrier 170. The first adapter bracket 140 is movably provided on the support frame 100 and has a first position and a second position relative to the support frame 100. In one embodiment, the first adapter bracket 140 is slidably provided on the support frame 100. For example, the first adapter bracket 140 is slidably provided on the push handle assembly 130. In Figure 2, there are two first adapter brackets 140, which are respectively slidably provided on the two push handle rods 131.

The first carrier 170 is used for carrying a child and may allow the child to lie down or sit, such as a seat, a carrycot, a child safety seat, a baby carrier, or the like. The first carrier 170 has a first adapter 171 as shown in Figure 1 that is releasably engageable with the first adapter bracket 140, so that the first carrier 170 can be mounted on the support frame 100 or removed from the support frame 100. As shown in Figure 4, the locking member 150 locks the first adapter bracket 140 to maintain it in the first position or the second position. As shown in Figure 3, the unlocking member 160 drives the locking member 150 to unlock, so that the first adapter bracket 140 can be switched between the first position and the second position.

In one embodiment, when the first adapter 171 is engaged with the first adapter bracket 140 and the first carrier 170 is mounted on the support frame, the first carrier 170 covers the unlocking member 160, thereby preventing a child or other persons from accidentally touching the unlocking member 160, especially when the child is riding, and thus improving safety during use. When it is required to adjust the position of the first carrier 170, the first adapter 171 is disengaged from the first adapter bracket 140, and the first carrier 170 is removed so as to expose the unlocking member 160. Then, an unlocking operation can be performed, and subsequently the first adapter bracket 140 is adjusted to the first position or the second position.

The child carrying device is thus configured so that, when adjusting the position of the first carrier, requires that the first carrier be removed first so as to expose the unlocking member before an unlocking operation can be performed, and then the position of the first adapter bracket is adjusted, thereby preventing accidental actuation of the unlocking member by a user or a child, and improving safety during use.

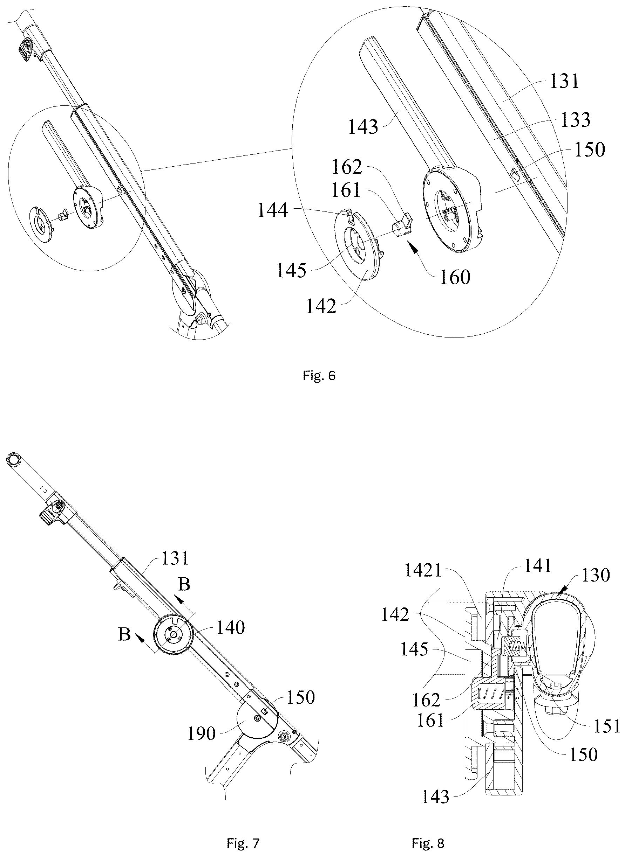

As shown in Figures 6 to 8, in one embodiment, the unlocking member 160 is movably provided on the first adapter bracket 140. When the first adapter 171 is disengaged from the first adapter bracket 140, the unlocking member 160 is exposed on the first adapter bracket 140. When the first adapter 171 is engaged with the first adapter bracket 140, the first adapter 171 covers the unlocking member 160.

In one embodiment, when the first adapter 171 is engaged with the first adapter bracket 140, the two can rotate about an axis. When folded, the first carrier 170 rotates to approach the front leg assembly 110 or the rear leg assembly 120. The first carrier 170 is a seat comprising a seat portion and a backrest portion, and the first carrier 170 itself also has a folded state and an unfolded state. In the folded state, the backrest portion approaches the seat portion, and then the whole rotates to approach the support frame 100.

Referring to Figures 6 to 8, in one embodiment, the unlocking member 160 is movably provided on the first adapter bracket 140 along an axial direction. The locking member 150 is movably provided on the support frame 100. For example, the locking member 150 is slidably or rotatably provided on the support frame 100 along an axial direction. The locking member 150 has a locking portion that protrudes from the support frame 100. The first adapter bracket 140 is provided with a locking groove 141 that cooperates with the locking portion. There are two locking members 150, which are respectively arranged corresponding to the first position and the second position. The support frame 100 is correspondingly provided with elastic members 151, such as springs, to drive the locking members 150 to reset. The unlocking member 160 has an operating portion 161 and a transmission portion 162 that acts on the locking member 150. When a force is applied to the operating portion 161, the transmission portion 162 pushes against the locking portion to cause the locking portion to exit the locking groove 141, thereby achieving unlocking. When the force applied to the operating portion 161 is removed, the locking member 150 resets under the action of the elastic member 151.

As shown in Figures 6 and 8, in one embodiment, the first adapter bracket 140 comprises a disc-shaped latching member 142 and a sliding member 143 that is slidably matched with the support frame 100. The support frame 100 is provided with a slide rail 133 that cooperates with the sliding member 143. The slide rail 133 is provided on an inner side of the push handle rod 131 and extends along a length direction of the push handle rod 131. The sliding member 143 has a sliding groove extending along the push handle rod 131, thereby increasing a cooperating area with the slide rail 133 and improving sliding stability.

A rear side of the latching member 142 is provided with an annular latching groove 1421 extending along a circumferential direction, which is used to limit axial movement of the first carrier 170 and prevent detachment from the first adapter bracket 140, and also allows the first carrier 170 to rotate for folding. In one embodiment, a positioning member for limiting rotation of the first carrier 170 is movably provided on the first adapter 171. Correspondingly, the latching member 142 is provided with a positioning groove 144 that cooperates with the positioning member. In one embodiment, the first carrier 170 has two mounting orientations, facing forward or facing backward.

As shown in Figure 8, in one embodiment, a central region of the latching member 142 is provided with a recessed groove 145 for concealing the unlocking member 160. When the first adapter 171 is engaged with the first adapter bracket 140, an opening of the recessed groove 145 is closed. Wherein, the operating portion 161 of the unlocking member 160 is protrudingly provided on a bottom wall of the recessed groove 145, so as to facilitate pressing for unlocking operation.

It is to be noted that each of said first adapters 171 may be configured to conceal and/or block the corresponding unlocking member 160.

In one embodiment, the child carrying device is a child stroller, and the first adapter bracket 140 is slidably mounted on the push handle assembly 130. The second position is higher than the first position, and the second position is relatively rearward, while the first position is relatively forward. In one embodiment, when the first adapter bracket 140 is in the first position, it is located on an inner side of the joint 190.

When the first adapter bracket 140 is switched from the first position to the second position, a certain space is vacated below. This space may be used to mount other accessories or carriers. In one embodiment, the child stroller comprises a second carrier 180. The second carrier 180 is used for carrying a child and may allow the child to lie down or sit, such as a seat, a carrycot, a child safety seat, a baby carrier, or the like. The first carrier 170 and the second carrier 180 may be the same or may be different. In one embodiment, a second adapter bracket 200 is provided on the front leg assembly 110. As shown in the figures, there are two second adapter brackets 200, which are respectively provided on the two front leg rods 111. The second carrier 180 is provided with a second adapter 181 that is releasably engageable with the second adapter bracket 200.

The child stroller has two usage modes. As shown in Figure 1, in a first usage mode of the child stroller, the first adapter bracket 140 is positioned in the first position, and the second carrier 180 is removed from the front leg assembly 110. At this time, the child stroller may be referred to as a single-occupant mode. As shown in Figure 2, in a second usage mode of the child stroller, the first adapter bracket 140 is positioned in the second position, and the second carrier 180 is mounted on the front leg assembly 110. At this time, the child stroller may be referred to as a dual-occupant mode.

Referring again to Figures 1 and 2, in one embodiment, the second adapter bracket 200 is movably connected to the front leg assembly 110 and has a use position and a folded position. When the child stroller is in the first usage mode, the second adapter bracket 200 is in the folded position. When the child stroller is in the second usage mode, the second adapter bracket 200 is in the use position. The use position and the folded position differ at least in a height direction. For example, the use position is higher than the folded position, and the use position is relatively more forward than the folded position, so as to avoid mutual interference between the second carrier 180 and the first carrier 170. As shown in the figures, the front leg assembly 110 further comprises a cross rod 113 connected at bottoms of the two front leg rods. The cross rod 113 is a footboard. After the first carrier 170 is mounted, it is located above the footboard. When viewed along a width direction, when the second adapter bracket 200 is in the use position, it protrudes from an upper surface of the front leg assembly 110. When the second adapter bracket 200 is in the folded position, the second adapter bracket 200 slides downward and does not protrude from the upper surface of the front leg assembly 110, resulting in a more concise appearance and avoiding unnecessary collision between a user and the second adapter bracket 200.

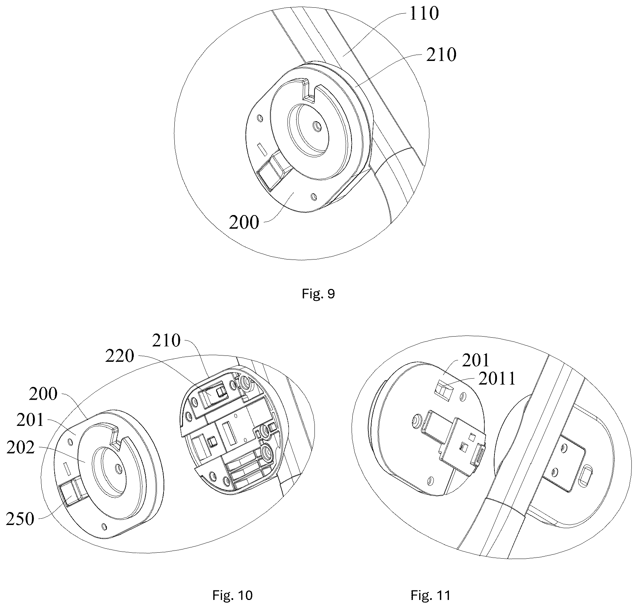

As shown in Figure 9, in one embodiment, the present application provides an adapter mounting structure, comprising a mounting seat 210, an adapter bracket movably provided on the mounting seat 210, and an adapter of a carrier that is releasably engaged with the adapter bracket. The adapter bracket has a use position and a folded position relative to each other. The adapter bracket may refer to the second adapter bracket 200 of the above embodiments, and the adapter may refer to the second adapter 181 of the above embodiments.

As shown in Figures 9 to 16, in one embodiment, the adapter mounting structure further comprises an anti-misassembly member 220. When the second adapter bracket 200 is in the use position, the second adapter bracket 200 is allowed to be engaged with the second adapter 181 in the use position. When the second adapter bracket 200 is in the folded position, the anti-misassembly member 220 prevents the second adapter bracket 200 from being engaged with the second adapter 181 in the folded position, thereby avoiding incorrect installation that would cause interference between the first carrier 170 and the second carrier 180 and result in damage to components.

In one embodiment, the anti-misassembly member 220 is movably provided and has a blocking position for preventing the second adapter bracket 200 from being engaged with the second adapter 181, and an avoidance position for allowing the second adapter bracket 200 to be engaged with the second adapter 181. Further, the anti-misassembly member 220 is linked with the second adapter bracket 200. The anti-misassembly member 220 is movably provided on the mounting seat 210. When the second adapter bracket 200 switches between the use position and the folded position, the anti-misassembly member 220 simultaneously switches between the avoidance position and the blocking position.

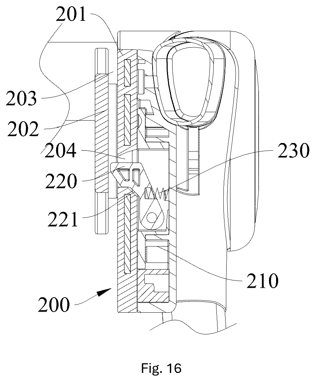

In one embodiment, the anti-misassembly member 220 is rotatably or slidably mounted on the mounting seat 210. The adapter mounting structure further comprises an elastic member 230 for driving the anti-misassembly member 220 to reset to the blocking position. As shown in Figure 16, the anti-misassembly member 220 is rotatably mounted on the mounting seat 210, and the elastic member 230 is a spring and acts between the anti-misassembly member 220 and the mounting seat 210.

For ease of operation, the anti-misassembly member 220 has a driving inclined surface 221. When the second adapter bracket 200 moves from the folded position to the use position, the second adapter bracket 200 acts on the driving inclined surface 221 so as to drive the anti-misassembly member 220 to switch from the blocking position to the avoidance position. In one embodiment, the second adapter bracket 200 has an avoidance opening 204. When the second adapter bracket 200 is in the use position, the anti-misassembly member 220 is aligned with the avoidance opening 204 and, under the action of the elastic member 230, protrudes from the avoidance opening 204 to switch to the blocking position. When the second adapter bracket 200 is in the folded position, the anti-misassembly member 220 is misaligned with the avoidance opening 204 and, under the action of the second adapter bracket 200, rotates to switch to the avoidance position while compressing the elastic member 230.

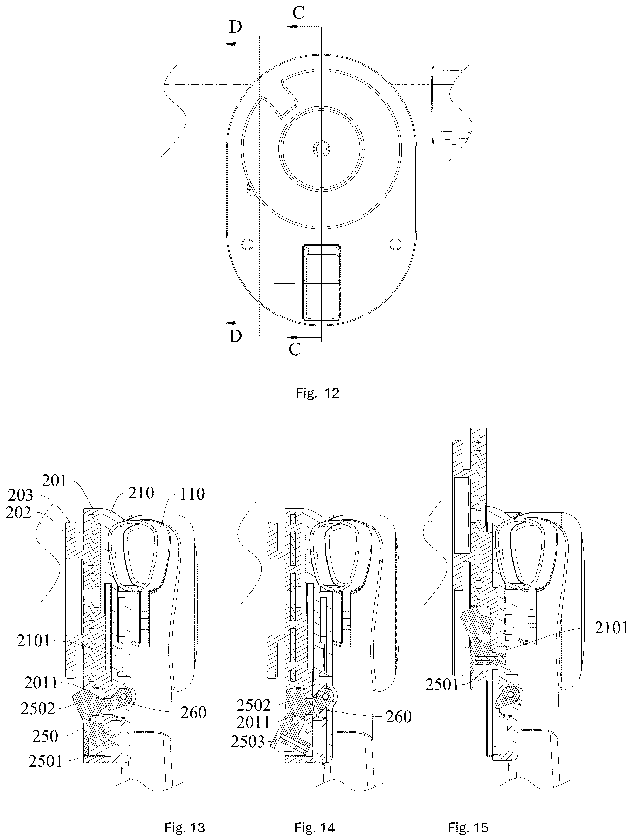

Referring to Figures 13 to 15, in one embodiment, the second adapter bracket 200 and the mounting seat 210 are slidably fitted with each other. Specifically, the second adapter bracket 200 comprises a base portion 201 arranged along an axial direction and a latching portion 202. The base portion 201 is slidably fitted with the mounting seat 210. A latching groove 203 is formed between the base portion 201 and the latching portion 202. After the second adapter 181 is engaged with the second adapter bracket 200, at least a part of the second adapter 181 is located in the latching groove 203, so as to limit axial movement of the second carrier 180. Wherein, the avoidance opening 204 is arranged on the base portion 201. When the anti-misassembly member 220 is in the blocking position, it protrudes from the avoidance opening 204 and extends into the latching groove 203.

In one embodiment, the base portion 201 of the second adapter bracket 200 is a disc-shaped structure and has an axial direction. The latching groove 203 is an annular latching groove. When the second adapter 181 is engaged with the second adapter bracket 200, the two are rotatable relative to each other about the axial direction. The mounting seat 210 is a waist-shaped structure. The base portion 201 is also a waist-shaped structure and is shape-matched with the mounting seat 210. When the second adapter bracket 200 is in the folded position, outer peripheries of the mounting seat 210 and the base portion 201 are flush with each other.

Continuing to refer to Figures 13 to 15, in one embodiment, the adapter mounting structure further comprises a locking member for locking the second adapter bracket 200 to maintain it in the use position or the folded position, hereinafter referred to as a second locking member 250. The second locking member 250 is movably provided on the second adapter bracket 200. For example, the second locking member 250 is rotatably or slidably provided. As shown in the figures, the second locking member 250 is rotatably mounted on the base portion 201 of the second adapter bracket 200, and has a second locking portion 2501 and a second operating portion 2502 located on two sides of a rotation shaft. The mounting seat 210 is provided with a second locking groove 2101 that cooperates with the second locking portion 2501. The second locking member 250 is provided at its rotation shaft position with a torsion spring for maintaining the second locking portion 2501 extending into the second locking groove 2101. During unlocking operation, the second operating portion 2502 is pressed, causing the second locking portion 2501 to tilt upward and exit the second locking groove 2101. In one embodiment, there are two second locking grooves 2101, which correspond respectively to the use position and the folded position.

Referring to Figures 13 to 15, in another embodiment, there is one second locking groove 2101, which corresponds to the use position. The adapter mounting structure further comprises a locking member for locking the second adapter bracket 200 to maintain it in the folded position, hereinafter referred to as a third locking member 260. The third locking member 260 is rotatably or slidably mounted on the mounting seat 210. The base portion 201 is provided with a third locking groove 2011 that cooperates with the third locking member 260. Wherein, an elastic member is provided in the mounting seat 210 to act on the third locking member 260 so as to drive the third locking member 260 to extend into the third locking groove 2011. For example, the third locking member 260 is rotatably mounted in the mounting seat 210, and the elastic member is a torsion spring. The second locking member 250 further has a second transmission portion 2503 for driving the third locking member 260 to exit the third locking groove 2011. In the folded position, the second transmission portion 2503 is aligned with the third locking groove 2011.

An non-claimed adaptive mounting structure is also proposed, said structure comprising a mounting seat 210, an adapter bracket or base 200 movably arranged on the mounting seat 210, and an adapter 181 releasably combined with the adapter bracket 200, wherein the adapter bracket 200 has a relative use position and a folded position, and the adaptive mounting structure includes an anti-misassembly member 220, which allows the adapter bracket 200 to be combined with the adapter 181 in the use position, but prevents the adapter bracket 200 from being combined with the adapter 181 in the folded position.

This can prevent the wrong installation of the corresponding carrier, avoid damaging the carrier itself or interfering with other components with the risk to damage these components, and prolong the service life.

The anti-misassembly member 200 may be movably arranged, having a blocking position that prevents the adapter bracket 200 from combining with the adapter 181 and an avoiding position that allows the adapter bracket 200 to combine with the adapter 181.

The anti-misassembly member 220 may be movably disposed on the mounting seat 210, and the anti-misassembly member 220 may switch between the avoiding position and the blocking position simultaneously when the adapter bracket 200 switches between the use position and the folded position.

The anti-misassembly member 220 may be provided with a driving inclined surface 221, and when the adapter bracket 200 moves from the folded position to the use position, the anti-misassembly member 220 may be driven from the blocking position to the avoiding position via the driving inclined surface 221.

The adaptive mounting structure may comprise an elastic member 230 that drives the anti-misassembly member 220 to return.

The adapter bracket 200 may include a base portion 201 and an engaging portion 202 arranged axially, the base portion being slidably engaged with the mounting seat 210, a clamping groove 203 being formed between the base portion 201 and the engaging portion 202, and the anti-misassembly member 220 entering the clamping groove 203 when the adapter bracket 200 is at the folded position and exits the clamping groove 203 when the adapter bracket 200 is at the use position.

The base portion may be provided with an avoidance opening 204 when the adapter bracket 200 is at the use position, the anti-misassembly member 220 aligning with the avoidance opening 204 and protrudes therefrom; and when the adapter bracket 200 is at the folded position, the anti-misassembly member 220 is misaligned with the avoidance opening 204.

The adapter 181 and the adapter bracket 200 may be rotatable relative to each other about an axis when coupled together.

The adaptive mounting structure may comprise a locking member 250 for locking the adapter bracket 200 in the use position or the folded position.

The adapter bracket 200 may each comprise locking means, configured to prevent the adapter brackets 200 from being moved from one of the positions to the other when a carrier is mounted on them, and allowing them to be moved when the carrier is removed from the adapter brackets 200.

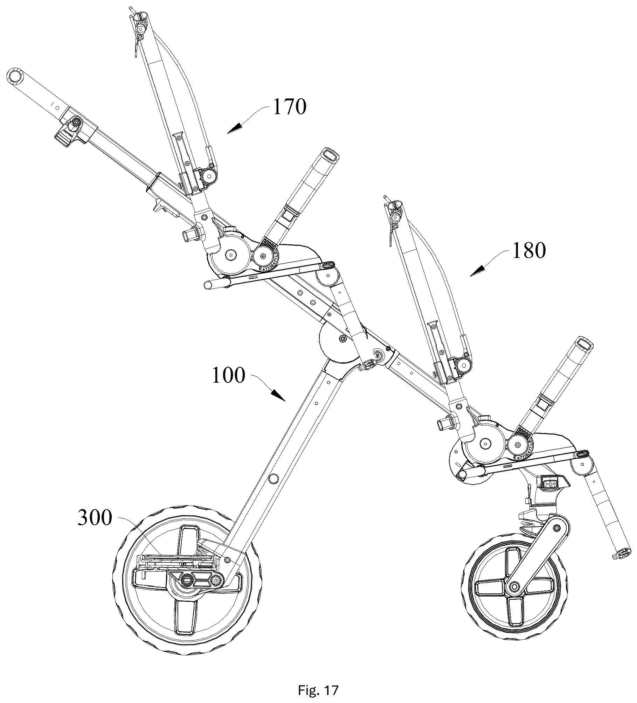

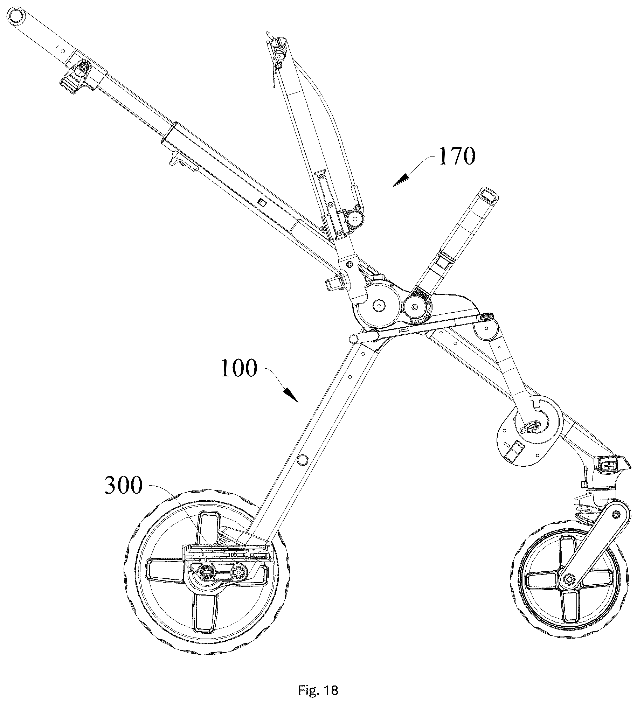

Referring to Figures 17 and 18, a child stroller is provided, comprising a support frame 100 and a carrying member 300 for allowing a child to stand. The support frame 100 may refer to the support frame described in the foregoing embodiments, and will not be repeated here. The carrying member 300 is movably connected to the rear leg assembly 120 and has a relatively forward first usage position and a relatively rearward second position. In actual use, the carrying member 300 may be adjusted to an optimal position according to factors such as the height and body size of the child. Alternatively, the position of the carrying member 300 may be adjusted according to different usage modes of the child stroller. For example, when the child stroller is in the first usage mode, the carrying member 300 is adjusted to the first usage position. When the child stroller is in the second usage mode, the first carrier 170 is positioned rearward, and correspondingly the carrying member 300 is adjusted to the second usage position.

In order to improve the load-bearing capacity of the carrying member 300, the rear leg assembly 120 comprises two rear leg rods 121 arranged opposite to each other and a transverse connecting member 123 connecting the two rear leg rods 121. In one embodiment, bottoms of the rear leg rods 121 are provided with wheel seats 124, the rear wheels 122 are mounted on the wheel seats 124, and the transverse connecting member 123 is arranged between the two wheel seats 124. In some embodiments, there may be one or more transverse connecting members 123.

In some embodiments, the carrying member 300 may slide or flip in a front-rear direction. For example, the carrying member 300 is rotatably connected to the rear leg assembly 120, and when in the first usage position, a front surface faces upward to allow a child to stand, and when in the second usage position, a back surface faces upward to allow a child to stand.

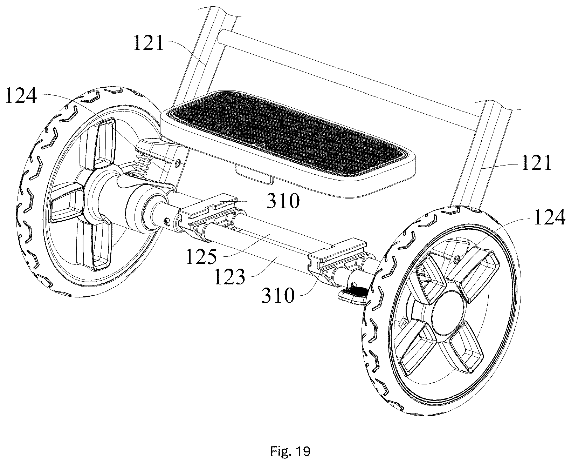

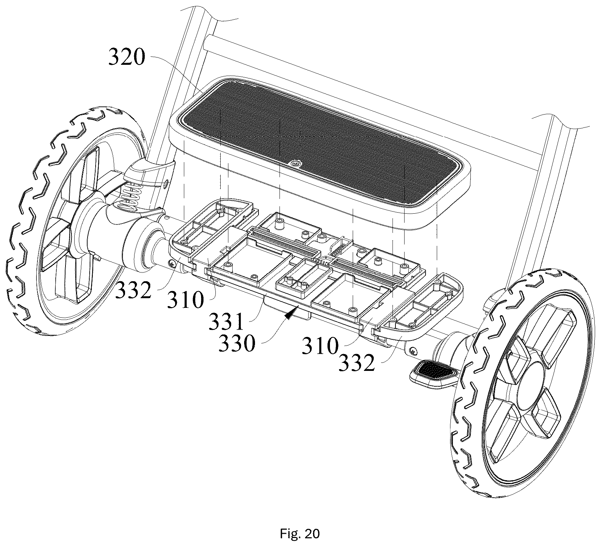

For example, as shown in Figures 19 and 20, a sliding seat 310 is provided on the rear leg assembly 120. In order to improve the supporting strength of the carrying member 300, the rear leg assembly 120 is provided with a transverse support member 125. The transverse connecting member 123 and the transverse support member 125 are arranged in a front-rear direction. There are two sliding seats 310, which are spaced apart along a width direction and mounted on the transverse connecting member 123 and the transverse support member 125. When in the first usage position, a center of gravity of the carrying member 300 is located on a front side of the transverse connecting member 123. When in the second usage position, the center of gravity of the carrying member 300 is located behind the transverse connecting member 123. The carrying member 300 comprises an upper portion 320 and a lower portion 330. The upper portion 320 and the lower portion 330 are connected by latching engagement and/or threaded connection. The lower portion 330 is slidably fitted with the sliding seat 310. An upper surface of the upper portion 320 is provided with anti-slip patterns. When the carrying member 300 moves between the first usage position and the second usage position, the carrying member 300 covers the sliding seat 310. As a result, the appearance is more attractive, and it is also avoided that a child steps into an empty space due to a height difference caused by the carrying member 300 and the sliding seat 310.

The lower portion 330 comprises three parts, namely a middle portion 331 located between the two sliding seats 310, and side portions 332 located on outer sides of the two sliding seats 310.

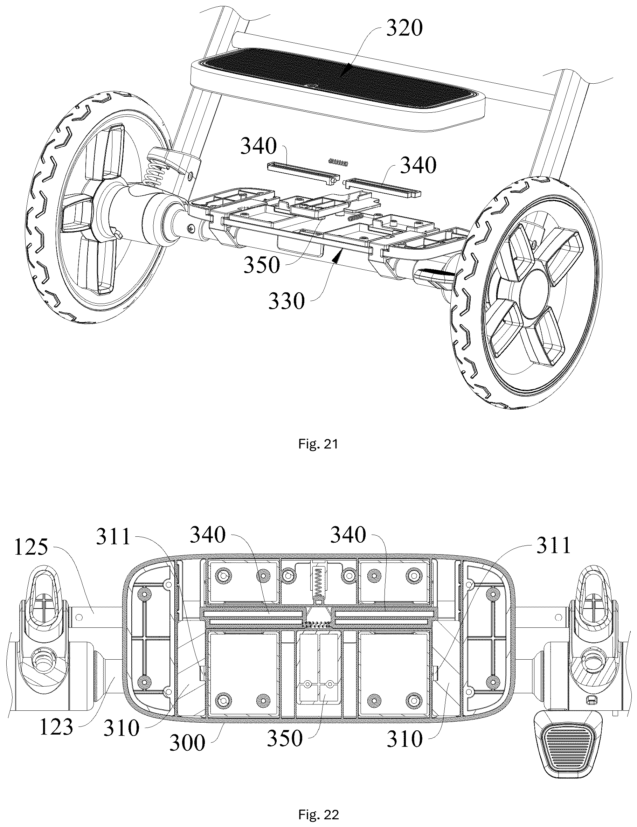

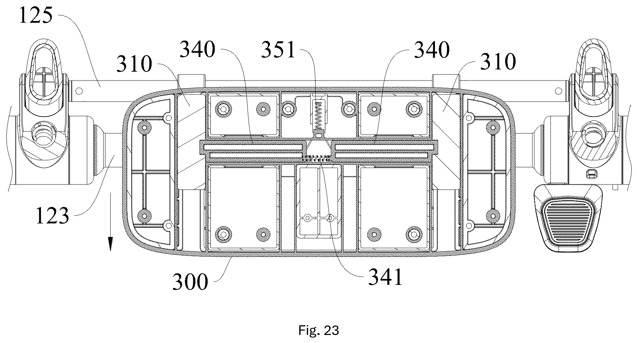

Referring to Figures 21 to 23, in one embodiment, the child stroller comprises a locking member for locking the carrying member 300 to maintain it in the first usage position and the second usage position, hereinafter referred to as a fourth locking member 340. The fourth locking member 340 is slidably mounted on the lower portion 330 along an extension direction of the transverse connecting member 123. There are two fourth locking members 340, which are arranged between the two sliding seats 310. When in the first usage position, an end of the fourth locking member 340 abuts against an end of the sliding seat 310, and the upper portion 320 abuts against another end of the sliding seat 310. When in the second usage position, the fourth locking member 340 extends into a fourth locking groove 311 on the sliding seat 310.

A second unlocking member 350 is slidably provided on the lower portion 330. The second unlocking member 350 is located between the two fourth locking members 340 and cooperates with inclined surfaces of the two fourth locking members 340. A sliding direction of the second unlocking member 350 is perpendicular to the transverse connecting member 123. The second unlocking member 350 has a driving portion that protrudes from a bottom of the lower portion 330.

In one embodiment, an elastic member 341 for driving the two fourth locking members 340 to reset is provided between the two fourth locking members 340, such as a spring. An elastic member 351 for driving the second unlocking member 350 to reset is provided in the lower portion 330, such as a spring. During unlocking, the driving portion is operated to drive the second unlocking member 350 to slide and compress the elastic member 351. Through the inclined surfaces, the two fourth locking members 340 are driven to slide toward each other and compress the elastic member 341, while simultaneously releasing the restriction on the sliding seat 310. At this time, adjustment of the position of the carrying member 300 is allowed. After adjustment to a desired position, the operating force on the driving portion is released. Under the action of the elastic member 351, the second unlocking member 350 resets. Under the action of the elastic member 341, the two fourth locking members 340 reset and extend into the fourth locking groove 311 or abut against ends of the sliding seat 310, so as to lock the carrying member 300.

The technical features of the above embodiments may be arbitrarily combined. For simplicity of description, not all possible combinations of the technical features in the above embodiments are described. However, as long as there is no contradiction among the combinations of these technical features, they shall be regarded as falling within the scope recorded in this description. When technical features of different embodiments are reflected in the same drawing, it may be regarded that the drawing simultaneously discloses combination examples of the corresponding embodiments.

The above embodiments merely express several implementation modes of the present application, and the descriptions thereof are relatively specific and detailed, but shall not be understood as limiting the scope of the patent application. It should be pointed out that for a person of ordinary skill in the art, several variations and improvements may be made without departing from the concept of the present application, and these all fall within the scope of protection of the present application.

## Claims

1. A child carrying device, comprising a support frame (100), provided with at least a pair of first adapter brackets (140) provided to releasably accommodate a removable first carrier (170), the first adapter brackets (140) being slidable relative to the support frame (100), between a first position and a second position,
**characterized in that** the first adapter brackets (140) each comprise locking means (150, 160), configured to prevent the first adapter brackets (140) from being moved from one of the positions to the other when a first carrier (170) is mounted on them, and allowing them to be moved when the first carrier (170) is removed from the first adapter brackets (140).

2. A child carrying device according to claim 1, wherein the locking means comprise a locking member (150), configured to lock the corresponding first adapter bracket (140) on the support frame (100), and an unlocking member (160) configured to drive the locking member to unlock.

3. A child carrying device according to claim 2, wherein the unlocking member (160) is accessible on the corresponding first adapter bracket (140) and active when the first carrier (170) is not attached to said first adapter bracket (140), and is concealed and/or blocked by an extension of the first carrier (170) when the first carrier is attached to said first adapter bracket (140), so that the unlocking member (160) is inaccessible and/or inactive.

4. A child carrying device according to claim 3, wherein the first carrier (170) is provided with a pair of first adapters (171) each releasably engageable with one of said first adapter brackets (140), each of said first adapters (171) concealing and/or blocking the corresponding unlocking member (160).

5. The child carrying device according to claim 4, wherein each of the first adapter brackets (140) comprises a latching member (142) and a sliding member (143) slidably matched with the support frame (100), the latching member and the sliding member being arranged in a horizontal direction, the latching member (142) being located on an inner side, the sliding member (143) being located on an outer side, and the unlocking member (160) is movably arranged on an inner surface of the latching member (142).

6. The child carrying device according to claim 5, wherein the unlocking member (160) is movably arranged in the horizontal direction.

7. The child carrying device according to claim 5, wherein the unlocking member (160) is arranged at a central position of the latching member (142).

8. The child carrying device according to claim 7, wherein a recessed groove (145) for concealing the unlocking member (160) is provided in a central region of the latching member (142).

9. The child carrying device according to any one of claims 1 to 7, said two first adapter brackets (140) being slidably mounted on a push handle assembly (130) of the support frame (100), for receiving said first carrier (170).

10. The child carrying device according to any one of claims 1 to 9, further comprising a second pair of adapter brackets (200) for receiving a second carrier (180), wherein the second adapter brackets (200) are provided on a front leg assembly (110) of the support frame (100), the second carrier (180) being provided with a pair of second adapters (181) releasably engageable with the second adapter brackets (200).

11. The child carrying device according to claim 10, wherein the child carrying device has at least two usage modes:
• in a first usage mode, a first carrier (170) is mounted on the support frame (100), the first adapter brackets (140) being positioned at the first position, and the second carrier (180) is removed from the front leg assembly (110); and
• in a second usage mode, the first adapter brackets (140) are positioned at the second position, and the second carrier (180) is mounted on the front leg assembly.

12. The child carrying device according to claim 10 or 11, wherein the second adapter brackets (200) are movably connected to the front leg assembly and have a use position and a folded position, and wherein in the first usage mode, the second adapter brackets (200) are in the folded position, and in the second usage mode, the second adapter brackets are in the use position.

13. The child carrying device according to any one of claims 10 to 12 when combined with any of claims 4 to 9, wherein when a first adapter (171) is engaged with a corresponding first adapter bracket (140), the two are able to rotate about an axis, the support frame (100) having a folded state and unfolded state, so that when the support frame (100) is folded, the first carrier (170) rotates to approach the front leg assembly (110) or a rear leg assembly (120) of the support frame (100).

14. The child carrying device according to claim 13, wherein the first carrier (170) is a seat comprising a seat portion and a backrest portion, and the first carrier (170) itself also has a folded state and an unfolded state, and in the folded state, the backrest portion approaches the seat portion, and then the whole rotates to approach the support frame (100).

15. The child carrying device according to claim 14, wherein a rear side of the latching member (142) is provided with an annular latching groove (1421) extending along a circumferential direction, which is used to limit axial movement of the first carrier (170) and prevent detachment from the first adapter bracket (140), and also allows the first carrier (170) to rotate for folding.

16. The child carrying device according to claim 15, wherein a positioning member for limiting rotation of the first carrier (170) is movably provided on the first adapter (171 and the latching member (142) is provided with a positioning groove (144) that cooperates with the positioning member.

17. The child carrying device according to any one of the preceding claims, the first carrier (170) having two mounting orientations, facing forward or facing backward.
